# EUROPÄISCHE PATENTSCHRIFT

(11) **EP 0 983 545 B1**
(45) Veröffentlichungstag und Bekanntmachung des Hinweises auf die Patenterteilung: **16.08.2001**
(21) Anmeldenummer: 98933475.0
(22) Anmeldetag: 07.05.1998
(51) Int. Cl.: G06F 9/42, G06F 9/46

(54) **RISC-PROZESSOR**
RISC PROCESSOR
PROCESSEUR RISC

(30) Priorität: 20.05.1997 DE 19721089
(43) Veröffentlichungstag der Anmeldung: 08.03.2000
(73) Patentinhaber: Infineon Technologies AG, 81669 München (DE)
(72) Erfinder: HAAS, Peter, D-85570 Markt Schwaben (DE)
(74) Vertreter: Zedlitz, Peter, Dipl.-Inf.
(86) Internationale Anmeldenummer: DE9801275
(87) Internationale Veröffentlichungsnummer: WO9853395

(56) Entgegenhaltungen:
- EP-A- 0 637 802
- MCGEADY S: "Inside Intel's i960CA superscalar processor" MICROPROCESSORS AND MICROSYSTEMS, JULY-AUG. 1990, UK, Bd. 14, Nr. 6, Seiten 385-396, XP000151094 ISSN 0141-9331
- LAMPSON B W ET AL: "A processor for a high-performance personal computer" , CONFERENCE PROCEEDINGS OF THE 7TH ANNUAL SYMPOSIUM ON COMPUTER ARCHITECTURE, LA BAULE, FRANCE, 6-8 MAY 1980 , 1980, NEW YORK, NY, USA, IEEE, USA, PAGE(S) 146 - 160 XP000212050 siehe Seite 150, linke Spalte, Zeile 1 - Seite 151, rechte Spalte, Zeile 16; Abbildung 3 siehe Seite 154, linke Spalte, Zeile 23 - Seite 156, linke Spalte, Zeile 43; Abbildungen 5,7
- BURSKY D: "SPEEDY 16-BIT MICROCONTROLLER TACKLES REAL-TIME APPLICATIONS" 12. Mai 1988 , ELECTRONIC DESIGN, VOL. 36, NR. 11, PAGE(S) 45/46, 48, 50 XP000097383 siehe das ganze Dokument

## Beschreibung

Vielschichtige und komplexe Vermittlungsprozeduren, bzw. Datenprotokolle in Vermittlungsanlagen erfordern jeweils auf ihren Verwendungszweck zugeschnittene Baugruppen. Auf diesen Baugruppen sind dann z.B. reine Logikschaltkreise oder zur Mehrfachausnutzungen bestimmte integrierte Schaltkreise oder Reduced Instruction Set Computer (RISC) -Prozessors angeordnet. An die in den Vermittlungsanlagen und insbesondere in den Schnittstellenbaugruppen anstehenden Vermittlungsprozeduren bzw. abzuarbeitende Datenprotokolle werden erhöhte Anforderungen bezüglich Ausfallsicherheit gestellt.
Die bekannten RISC-Prozessoren weisen den Nachteil auf, daß sich durch eine externe Beeinflußung oder Programmfehler im Programmablauf Fehler ergeben, bei denen der Prozessor durch Programmschleifen blockiert wird.
Neben dem genannten Nachteil schränken die üblichen Interruptsteuerungen der herkömmlichen RISC-Prozessoren die Verwendung dieser bei hohen Verarbeitungsgeschwindigkeiten ein.

Der Erfindung liegt die Aufgabe zugrunde, eine RISC-Prozessor Architektur und ein Verfahren anzugeben, bei der eine Blockierung des Prozessors vermieden wird.

Die Aufgabe wird durch die Merkmale des Patentanspruchs 1 und 7 gelöst.

Die Erfindung bringt den Vorteil mit sich, daß keine anhaltende Blockierung des RISC-Prozessorbetriebs durch Programmabläufen möglich ist, da nach einer Störung von jeder beliebigen Programmadresse in den Ausgangszustand zurückgesprungen wird.

Die Erfindung bringt den Vorteil mit sich, daß mit einer Implementierung von Task- und Function-Stack's Befehls-Sequenzen sicher und schnell abgearbeitet werden können.

Weitere vorteilhafte Ausbildungen der Erfindung sind in den Unteransprüchen angegeben.

Weitere Besonderheiten der Erfindung werden aus der nachfolgenden näheren Erläuterung zu einem Ausführungsbeispiel anhand von Zeichnungen ersichtlich.

Es zeigen:
Figur 1 einen Aufbau eines RISC-Prozessors,
Figur 2 eine Softwarestruktur und
Figur 3 einen Aufbau eines Sequenz-Controllers.

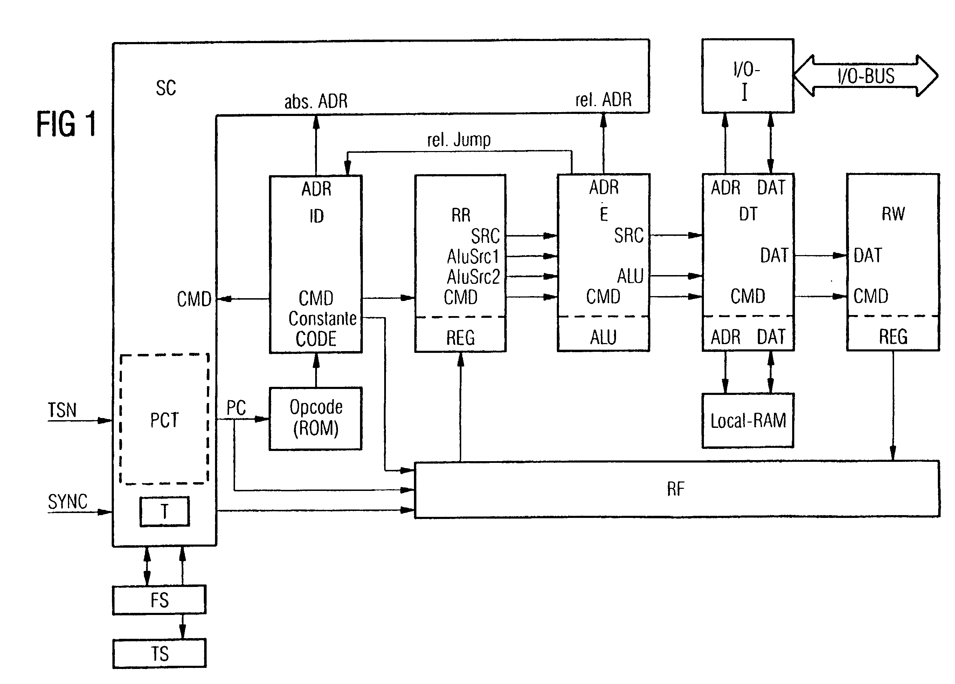

In Figur 1 ist schematisch ein Aufbau eines RISC-Prozessors dargestellt. In dieser Darstellung sind die wesentlichen in einer Pipeline angeordneten Komponenten eines RISC-Prozessors wiedergegeben. Diese Komponenten sind zum Beispiel ein Sequenz-Controller SC, ein Function-Stack FS und ein Task-Stack TS, ein Instruction-Decoder ID, eine Register Read-Einheit RR, eine Execute-Einheit E, eine Data-Transfer-Einheit DT, eine Register Write-Einheit RW, eine Eingabe-und Ausgabeeinheit I/O sowie ein Register-File RF. Der Sequence-Controller SC liefert im wesentlichen für den Instruction-Dekoder ID eine Adresse, um aus einem Opcode-Speicher einen Befehlscode auszulesen. Der Opcode-Speicher ist beispielsweise in einem Bereich eines Speicherbausteins ROM angeordnet. Aus dem Befehlscode werden im Instruction-Decoder ID Kommandos CMD1, CMD2,... CMDn für die einzelnen in der Pipeline angeordneten Einheiten des in Fig. 1 dargestellten RISC-Prozessors gebildet. Die Kommandos CMDn werden dann vom Instruction-Decoder ID nach links und rechts an die jeweils in der Pipeline angeordneten Verarbeitungseinheiten weitergeleitet. Für jede dieser Verarbeitungseinheiten RR, E, DT, RW oder SC wird dazu ein Kommandofeld erstellt. Nach rechts gehen z.B. Kommandofelder für die Register-Read-Einheit RR, für die Execute-Einheit E, für die Data-Transfer-Einheit DT und für die Register-Write-Einheit RW, während nach links das Kommandofeld für direkte Sprungbefehle weitergereicht wird. Direkte Sprungbefehle werden innerhalb eines Taktes von dem Instruction-Decoder ID und dem Sequence-Controller SC ausgeführt. Ein direkter (absoluter) Sprungbefehl erfolgt ohne Verzögerung. Dies ist besonders Vorteilhaft für eine Programmstruktur bei der über Tabellen die Tasks und Functions mit Sprungbefehlen erreicht werden. Von der Register-Read-Einheit RR werden die Kommandos aus dem Register-File RF gelesen und an die Execute-Einheit E weitergeleitet. Die aus dem Register-File RF ausgelesenen Daten sind die Daten die im Register SRC und im Register AluSrc1, AluSrc2 (zwei Operanden) abgelegt werden. In der Execute-Einheit E werden alle arithmetischen und logischen Befehle ausgeführt, d.h. alle Additions- und Subtraktionsbefehle sowie alle logischen Verknüpfungen.
Sprünge werden im Kommando CMD des Instruction-Decoders ID angezeigt. Dabei wird unterschieden zwischen den Kommandos CMD0, CMD1, CMD2 usw.. Zusätzlich gibt es noch eine weitere Variante (indirekte Sprünge) zur Adressenermittlung für das Verzweigen innerhalb eines Programms. In dieser Variante wird das Verzweigen im Prozessorprogramm über relative Sprungadressen (rel. Jump) bewirkt. Dabei wird die neue Adresse über die Execute-Einheit E gebildet und über ein Strom-Signal dem Sequenz-Controller SC übergegeben. Dieser Sprung (relative Adresse) wird nicht im Instruction-Decoder ID codiert sondern erst in der Execute-Einheit E ermittelt.

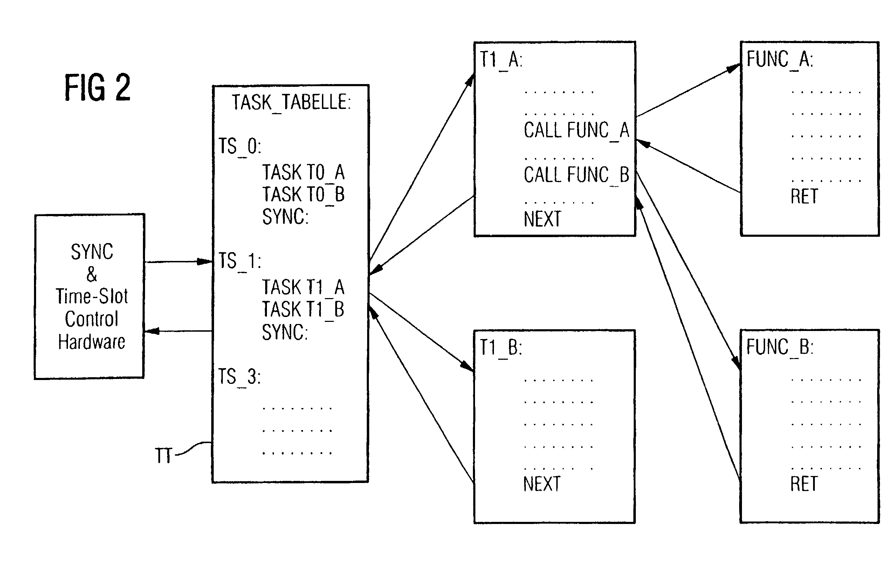

Für die Belegung des Task-Stacks TS gibt es ein Kommando. Mit diesem Kommando wird ein Sprungbefehl während einer Taktperiode auf eine absolute Adresse ausgeführt und die nachfolgende Abarbeitungsadresse im Task-Stack TS abgelegt. Ein äquivalentes Entfernkommando hierfür ist der Next-Befehl. Durch den Next-Befehl wird über den Instruction-Decoder ID ein Kommando an den Sequence-Controller SC gegeben, das dafür sorgt, daß aus der Adresse die im Task-Stack TS abgelegt ist eine neue Programmadresse gebildet wird.
Für die Belegung des Function-Stacks FS gibt es ein Kommando. Mit diesem Kommando wird ein Sprungbefehl NEXT während einer Taktperiode auf eine absolute Adresse ausgeführt und die nachfolgende Abarbeitungsadresse im Function-Stack FS abgelegt.
Ein äquivalentes Entfernkommando hierfür ist der Return-Befehl. Durch den Return-Befehl wird über den Instruction-Decoder ID ein Kommando an den Sequence-Controller SC gegeben, das dafür sorgt, daß aus der Adresse die im Function-Stack FS abgelegt ist eine neue Programmadresse gebildet wird.
In diesem Ausführungsbeispiel ist die Verschachtelung der Unterprogramme auf zwei begrenzt (Task, Call) (siehe Fig. 2). Eine weitere Verschachtelungstiefe kann über zusätzliche Stack's, Aufrufbefehle und Returnbefehle realisiert werden.

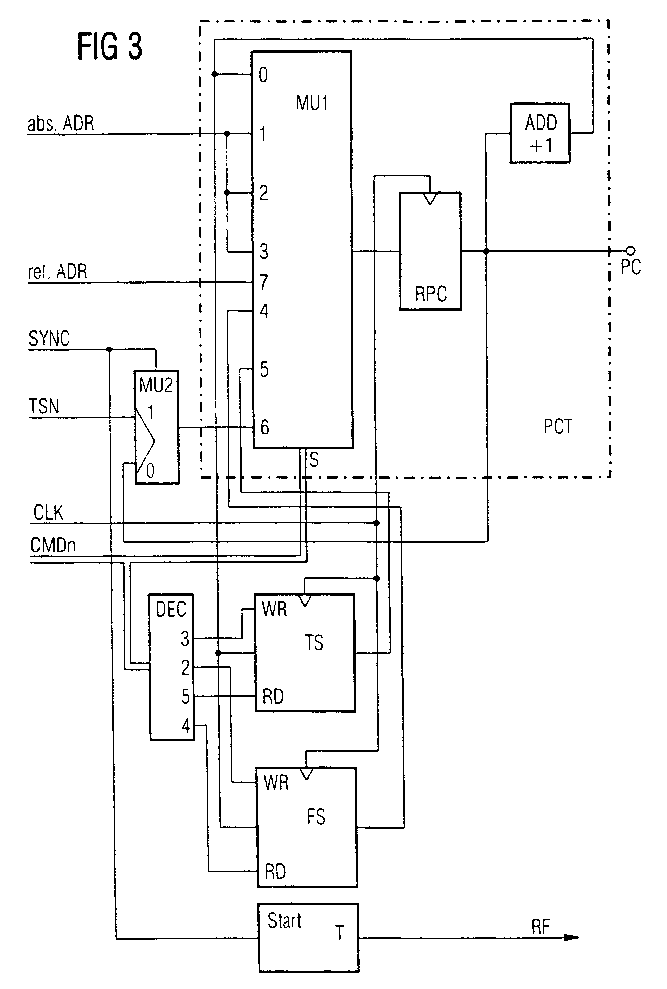

Fig. 2 zeigt die Struktur des im RISC-Prozessor implementierten Programms. Das Programm des RISC-Prozessors ist beispielsweise in einem ROM abgespeichert. Das Programm des Prozessors ist dabei so aufgebaut, daß ein Task-Aufruf Tnx nur über eine Task-Tabelle TT und ein weiterer Functions-Aufruf Funcx nur aus einer Task Tnx erfolgt. In einem Task-Stack TS wird dazu eine erste Rücksprungadresse für den Befehl NEXT und in einem Function-Stack FS eine zweite Rücksprungadresse für den Befehl RET zwischengespeichert. Die erste und zweite Rücksprungadresse NEXT, RET wird dabei jeweils aus einer Folgeadresse einer aktuellen Adresse beim Aufruf des Unterprogramms gebildet (siehe Fig. 3). Da jede Function Funcx mit einem Function-Return RET und jede Task Tnx mit einem Task-Return NEXT endet, wird sichergestellt, daß es immer einen Rücksprung in die Task-Tabelle TT gibt. Eine Verschachtelungstiefe von 1 für eine Task und eine Function bedeutet, daß man nur eine Task aufrufen kann. Aus der Function Funcx kann keine weitere Function oder Task aufgerufen werden. Aus der Task können jedoch weitere Functionen aufgerufen werden. Die Tasks werden aus einer Tasktabelle TT abgearbeitet. Eine Tasktabelle TT enthält neben den Taskaufrufen zusätzliche SYNC-Befehle. Beim Ausführen eines SYNC-Befehls wird der Prozessor angehalten, bis ein SYNC-Impuls von der Hardware erzeugt wird. Beim Eintreffen des SYNC-Impulses wird aus einer von der Hardware angelegten Timeslot-Nummer eine Sprungadresse erzeugt, die auf eine neue Adresse innerhalb der Tasktabelle TT zeigt.
Die erste Adresse entspricht einer Zeitschlitznummer TSN.
Mit dem oben beschriebenen Programmaufbau wird eine anhaltende Blockierungen bei Programmabläufen wirksam verhindert.

Fig. 3. zeigt einen Programmcounter PCT. Dieser Programmcounter PCT ist ein Teil des Sequenz-Controllers SC. Der Programmcounter PCT besteht aus einem Register RPC, einen Addierer ADD und einem ersten Umschalter z.B. einem Multiplexer MU1. Mit einem Kommando CMDn wird der erste Multiplexer MU1 angesteuert. Bei einem Kommando CMD0 wird ein einfacher Befehl wie Continue, Execute oder local Store usw. ausgeführt. Bei CMD1 erfolgt ein absoluter Sprung, bei CMD2 erfolgt ein CALL auf eine absolute Adresse, bei CMD3 erfolgt ein Taskaufruf durch eine absolute Adresse, bei CMD4 erfolgt ein Return RET vom Funktion-Stack FS, bei CMD5 erfolgt ein Next-Befehl vom Task-Stack TS und bei CMD6 erfolgt ein SYNC-Befehl und bei CMD 7 ein relativer Sprung. Zur Ansteuerung des Task-Stack TS und des Funktion-Stack FS wird das Kommando CMDn zuerst einem Decoder DEC zugeführt. Aus den Kommandos CMDn werden in einer Deocodiereinheit DEC die Read/Write Steuersignale decodiert. In Abhängigkeit der Steuersignale aus der Decodiereinheit DEC werden im Task-Stack TS und Function-Stack FS erste und zweite Rücksprungadressen gespeichert. Über einen zweiten Umschalter z. B einen Multiplexer MU2 kann für SYNC-Befehl (CMD=6) zwischen einer aktuellen Programmadresse (SYNC=0) und einer einer Zeitschlitznummer TSN entsprechenden ersten Adresse (SYNC=1) gewählt werden.
Ein Sequence-Controller SC hat wie bereits beschrieben in erster Linie die Aufgabe die nächste Programmadresse PC zu berechnen und bereitzustellen. Zur Steuerung des Sequence-Controllers SC gibt es mehrere Möglichkeiten:
Durch einen Synchronisierimpuls SYNC zu Beginn eines jeden Zeitschlitzes TSN wird der Sequence-Controller SC durch die Multiplexer MU1/MU2 darauf vorbereitet beim nächsten SYNC-Befehl CMD6 in der Task-Tabelle (Aufgabentabelle) in eine Task TS1, TS2... zu verzweigen. Die Adresse innerhalb der Task-Tabelle TT wird durch die von außen angelegte Zeitschlitznummer TSN bestimmt.
Durch den Synchronimpuls SYNC wird zusätzlich ein Timer T gestartet, wobei durch dessen Zählerstand jede Task TnA,..., Tnx entscheiden kann, ob sie noch vor Ende des Zeitschlitzes ablauffähig ist. Bei einem SYNC-Befehl CMD6 bleibt der Sequence-Controller SC auf der aktuellen Adresse stehen und wartet auf einen SYNC-Impuls danach gibt der Sequence-Controller SC in Abhängigkeit der Zeitschlitznummer TSN auf eine neue Programmadresse. Zur Ausführung der Befehle CMD erhält der RISC-Prozessor unterschiedliche Befehle für den Task- oder Functionsaufruf (CMD2(TASK)/CMD3(CALL)) und einen entsprechenden Rücksprung (CMD4(NEXT)/CMD5 (RET)) sowie ein SYNC-Befehl CMD6 zum Synchronisieren mit dem SYNC-Impuls mit der zugehörigen Zeitschlitznummer TSN. Dem Sequence-Controller SC werden dazu zwei Stack-Register(Function- und Task-Stack) FS, TS für die Speicherung der Rücksprungadressen zur Verfügung gestellt.

## Patentansprüche

1. Verfahren zum Aufrufen von Unterprogrammen bei einem Reduced Instruction Set Computer (RISC)- Prozessor, mit folgenden Verfahrensschritten,
in einem ersten Programmschritt wird mit einer ersten Adresse (TSN) ein von mehreren in einer Task-Tabelle (TT) gespeichertes Programmteil (TSn) aufgerufen,
in einen zweiten Programmschritt wird von der Task-Tabelle (TT) in eine Task (Tna,...Tnx) gesprungen und eine erste Rücksprungadresse (NEXT) ermittelt und in einem separaten Speicher (TS) gespeichert,
nach Abarbeitung der Task (Tna, ... ,Tnx) wird mit Hilfe der gespeicherten ersten Rücksprungadresse (NEXT) zur Task-Tabelle (TT) zurückgesprungen und
daß bei einer weiteren Verzweigung aus der Task (Tna,...,Tnx) in Unterprogramme (Funca,...,Funcx) eine zweite Rücksprungadresse (RET) ermittelt und diese in einem weiteren separaten Speicher (FS) gespeichert wird.

2. Verfahren nach Anspruch 1,
**dadurch gekennzeichnet**
daß nach Abarbeitung des Unterprogramms (Funca,..., Funcx) mit Hilfe der gespeicherten zweiten Rücksprungadresse (RET) in die Task (Tnx) zurückgesprungen wird.

3. Verfahren nach Anspruch 1,
**dadurch gekennzeichnet**
daß die erste und zweite Rücksprungadresse (NEXT, RET) jeweils die Folgeadresse einer aktuellen Sprungadresse (TaskTnx, Call Funcx) ist.

4. Verfahren nach Anspruch 1,
**dadurch gekennzeichnet,**
daß ein Task-Aufruf (TaskTnx) aus der Task-Tabelle TT erfolgt,
daß aus einer Task (T1 A) ein Unterprogramm-Aufruf (Call FUNCX) erfolgt.

5. Verfahren nach einem der vorhergehenden Ansprüche,
**dadurch gekennzeichnet,**
daß der erste Programmschritt mit einer ersten Adresse (TSN) ausgeführt wird nachdem ein Sychronimpuls (SYNC) diese freigegeben hat.

6. Verfahren nach Anspruch 5,
**dadurch gekennzeichnet,**
daß vor einer Freigabe der ersten Adresse (TSN) ein Timer (T) gestartet wird und je nach Zählerstand des Timers (T) entschieden wird ob eine aufgerufene Task (Tnx) noch vor Ende einer aktuellen Taktperiode abgearbeitet werden kann, oder ob die aufgerufene Task beendet wird.

7. Anordnung eines Reduced Instruction Set Computer (RISC)-Prozessors mit einem Sequenz-Controller (SC) zur Bereitstellung von Programmadressen, der einen ersten Umschalter (MU1) aufweist, der nach Maßgabe von Kommandos (CMDn) die am Steuereingang des ersten Umschalters anliegen jeweils eine Adresse von den an den Eingängen des ersten Umschalters (MU1) anliegenden Adressen (abs.ADR, rel.ADR,....) an eine nachgeordnete Einheit (OPCODE) weiterleitet,
**dadurch gekennzeichnet,**
daß ein zweiter Umschalter (MU2) vorgesehen ist, an dessen ersten Eingang eine erste Adresse (TSN) und an dessen zweiten Eingang eine weitere Adresse anliegt,
daß ein Ausgang des zweiten Umschalters (MU2) mit einem Eingang des ersten Schalters (MU1) verbunden ist,
daß der Ausgang des ersten Umschalters (MU1) über einen Addierer (ADD) zur Ermittlung einer nächsten Adresse die gleichzeitig eine Rücksprungadresse (NEXT, RET) bei Aufruf in eine Task (TASKTnx) oder ein Unterprogramm (CALL FUNCX) mit einem Dateneingang von mindestens einer Speichereinheit (TS, FS) verbunden ist,
daß eine Decodiereinheit (DEC) vorgesehen ist, deren Eingang mit dem Steuereingang (S)des ersten Umschalters (MU1) verbunden ist,
daß Ausgänge der Decodiereinheit (DEC) mit Steuereingängen (WR, RD) der Speichereinheit (TS, FS) verbunden sind und
daß mindestens ein Ausgang der Speichereinheiten (TS, FS) mit einem Eingang des ersten Umschalters (MU1) verbunden ist.

8. Anordnung nach Anspruch 7,
**dadurch gekennzeichnet,**
daß die Speichereinheit (TS, FS) aus einem ersten und zweiten Register gebildet ist.

## Claims

1. Process for calling subroutines in a reduced instruction set computer (RISC) processor, having the following process steps,
in a first program step, one of many program sections (TSn) stored in a task table (TT) is called using a first address (TSN),
in a second program step, a jump is made from the task table (TT) to a task (Tna, ..., Tnx), and a first return address (NEXT) is determined and stored in a separate memory (TS),
after executing the task (Tna, ..., Tnx), the task table (TT) is returned to using the first return address (NEXT) in memory, and
in the case of a further branch from the task (Tna, ..., Tnx) to subroutines (Funca, ..., Funcx), a second return address (RET) is determined and this is stored in another separate memory (FS).

2. Process according to Claim 1, characterized in that after executing the subroutine (Funca, ..., Funcx), the task (Tnx) is returned to using the second return address (RET) in memory.

3. Process according to Claim 1, characterized in that the first and second return addresses (NEXT, RET) are in each case the reference address of a current jump address (TaskTnx, Call Funcx).

4. Process according to Claim 1, characterized in that a task call (TaskTnx) is made from the task table (TT),
and in that a subroutine call (Call FUNCX) is made from a task (T1 A).

5. Process according to one of the preceding claims, characterized in that the first program step is run with a first address (TSN) after a sync pulse (SYNC) has enabled the latter.

6. Process according to Claim 5, characterized in that before enabling the first address (TSN), a timer (T) is started and according to the counter state of the timer (T), a decision is made as to whether a called task (Tnx) can still be executed before the end of the current clock period, or whether the called task is terminated.

7. Arrangement of a reduced instruction set computer (RISC) processor with a sequence controller (SC) for providing program addresses which has a first selector switch (MU1) which, in accordance with commands (CMDn) that are applied to the control input of the first selector switch, in each case forwards one address of the addresses (abs.ADR, rel.ADR, ...) applied to the inputs of the first selector switch (MU1) to a downstream unit (OPCODE), characterized in that a second selector switch (MU2) is provided, to whose first input a first address (TSN) is applied and to whose second input another address is applied,
in that an output of the second selector switch (MU2) is connected to an input of the first switch (MU1),
in that the output of the first selector switch (MU1) is connected to a data input of at least one memory unit (TS, FS) via an adder (ADD) for determining a next address which is at the same time a return address (NEXT, RET) when calling to a task (TASKTnx) or a subroutine (CALL FUNCX),
in that a decoder (DEC) is provided, whose input is connected to the control input (S) of the first selector switch (MU1),
in that outputs of the decoder unit (DEC) are connected to control inputs (WR, RD) of the memory unit (TS, FS), and
in that at least one output of the memory units (TS, FS) is connected to an input of the first selector switch (MU1).

8. Arrangement according to Claim 7, characterized in that the memory unit (TS,FS) is formed by a first and a second register.

## Revendications

1. Procédé pour appeler des sous-programmes dans le cas d'un processeur Reduced Instruction Set Computer (RISC), comportant les étapes suivantes :
dans une première étape de programme, on appelle avec une première adresse (TSN) une partie de programme (TSn) parmi plusieurs mémorisées dans un tableau de tâches (TT),
dans une deuxième étape, on saute du tableau de tâches (TT) dans une tâche (Tna à Tnx) et on détermine une première adresse de retour (NEXT) que l'on mémorise dans une mémoire séparée (TS),
après le traitement de la tâche (Tna à Tnx), on revient à l'aide de la première adresse de retour mémorisée (NEXT) au tableau de tâches (TT) et
lors d'un autre branchement à partir de la tâche (Tna à Tnx) dans des sous-programmes (Funca à Funcx), on détermine une deuxième adresse de retour (RET) et on mémorise celle-ci dans une autre mémoire séparée (FS).

2. Procédé selon la revendication 1,
caractérisé par le fait que,
après le traitement du sous-programme (Funca à Funcx), on revient à l'aide de la deuxième adresse de retour mémorisée (RET) à la tâche (Tnx).

3. Procédé selon la revendication 1,
caractérisé par le fait que
la première et la deuxième adresse de retour (NEXT, RET) sont à chaque fois l'adresse de chaînage d'une adresse de saut actuelle (TaskTnx, Call Funcx).

4. Procédé selon la revendication 1,
caractérisé par le fait que
un appel de tâche (TaskTnx) s'effectue à partir du tableau de tâches (TT) et un appel de sous-programme (Call FUNCX) s'effectue à partir d'une tâche (T1 A).

5. Procédé selon l'une des revendications précédentes,
caractérisé par le fait que
on exécute la première étape avec une première adresse (TSN) après qu'une impulsion de synchronisation (SYNC) a libéré celle-ci.

6. Procédé selon la revendication 5,
caractérisé par le fait que,
avant une libération de la première adresse (TSN), on déclenche un temporisateur (T) et, selon l'état de compteur du temporisateur (T), on décide si une tâche appelée (Tnx) peut encore être traitée avant la fin d'une période de cycle actuelle ou si la tâche appelée est terminée.

7. Agencement d'un processeur Reduced Instruction Set Computer (RISC) avec un contrôleur de séquence (SC) qui est destiné à préparer des adresses de programme et qui comporte un premier commutateur (MU1) qui, en fonction de commandes (CMDn) qui se trouvent à l'entrée de commande du premier commutateur, retransmet à chaque fois une adresse parmi les adresses (abs. ADR, rel. ADR, ...) présentes aux entrées du premier commutateur (MU1) vers une unité agencée du côté aval (OPCODE),
caractérisé par le fait que
il est prévu un deuxième commutateur (MU2) à la première entrée duquel se trouve une première adresse (TSN) et à la deuxième entrée duquel se trouve une autre adresse,
une sortie du deuxième commutateur (MU2) est reliée à une entrée du premier commutateur (MU1),
la sortie du premier commutateur (MU1) est reliée à une entrée de données d'au moins une unité de mémoire (TS, FS) par l'intermédiaire d'un additionneur (ADD) pour déterminer une prochaine adresse qui est en même temps une adresse de retour (NEXT, RET) lors de l'appel dans une tâche (TASKTnx) ou dans un sous-programme (CALL FUNCX),
il est prévu une unité de décodage (DEC) dont l'entrée est reliée à l'entrée de commande (S) du premier commutateur (MU1),
des sorties de l'unité de décodage (DEC) sont reliées à des entrées de commande (WR, RD) de l'unité de mémoire (TS, FS) et
au moins une sortie des unités de mémoire (TS, FS) est reliée à une entrée du premier commutateur (MU1).

8. Agencement selon la revendication 7,
caractérisé par le fait que
l'unité de mémoire (TS, FS) est formée à partir d'un premier et d'un deuxième registre.
